# FASCICULE DE BREVET EUROPEEN

(11) **EP 1 909 114 B1**
(45) Date de publication et mention de la délivrance du brevet: **14.11.2012**
(21) Numéro de dépôt: 07301387.2
(22) Date de dépôt: 21.09.2007
(51) Int. Cl.: G01S 15/93, G01S 15/06, G01S 15/08

(54) **Dispositif d'aide à la conduite d'un véhicule industriel**
Vorrichtung zur Unterstützung des Fahrens eines Schwerlastzugs
Device for assistance in driving an industrial vehicle

(30) Priorité: 21.09.2006 FR 0653887
(43) Date de publication de la demande: 09.04.2008
(73) Titulaire: Derisys, 71200 Le Creusot (FR)
(72) Inventeur: Petit, Patrick, 71200 Le Creusot (FR)
(74) Mandataire: Palix, Stéphane

(56) Documents cités:
- EP-A- 0 357 855
- WO-A-2006/114206
- DE-A1- 19 831 262
- DE-A1- 19 843 564
- US-A- 5 528 217
- US-A- 5 574 426
- US-A- 5 734 336
- US-A- 5 754 123
- US-A- 5 869 764
- US-A1- 2002 189 336
- US-A1- 2003 141 965
- US-A1- 2006 119 473

## Description

### DOMAINE TECHNIQUE

La présente invention se rapporte au domaine des dispositifs permettant de faciliter la conduite d'un véhicule, notamment en marche arrière. Ce dispositif est particulièrement adapté aux véhicules industriels comportant une visibilité limitée, tels que les poids lourds ou tout véhicule de chantier. De tels dispositifs d'aide à la conduite comportent au moins un capteur de recul qui peut être de différentes technologies, notamment à ultrasons, à effet Doppler... Ainsi, par la suite, on désignera par "capteur" tout organe apte à assurer la détection sans contact d'un obstacle situé à proximité du véhicule industriel.

L'invention vise plus particulièrement un moyen permettant d'éviter des accidents notamment lors des phases d'arrivée et de départ d'un quai de chargement ou déchargement de la marchandise d'un véhicule industriel.

### ART ANTERIEUR

De façon générale, les dispositifs d'aide à la conduite délivrent une information sonore ou visuelle représentative de la distance entre le véhicule et un obstacle en direction duquel le véhicule se dirige.

Ainsi, le document EP 0 357 855 décrit un dispositif d'aide à la conduite comprenant un radar à micro-ondes faisant office de capteur à effet Doppler. Le capteur permet de mesurer la distance entre un mur et le pare-chocs arrière du véhicule lors de son déplacement en marche arrière.

Cependant, si ce système permet d'informer le conducteur qu'un obstacle se déplace, le signal sonore d'information de la distance est simplement modifié à la nouvelle distance de l'obstacle. Le signal sonore correspond à des impulsions qui sont émises d'autant plus rapprochées que la distance avec l'obstacle est faible. En d'autres termes, si l'obstacle se rapproche du véhicule, le signal sonore augmente simplement sa fréquence. Ainsi, il existe un réel risque d'accident puisque, d'une part, les chauffeurs doivent positionner l'arrière de leur véhicule au plus proche du quai et par conséquent à une très courte distance de l'arrière du véhicule. D'autre part, les chauffeurs ne peuvent distinguer une différence de signal sonore entre un quai et une personne qui viendrait tomber ou s'immiscer entre le quai et l'arrière du véhicule se rapprochant du quai.

Ainsi, un premier objectif de l'invention est d'éviter tout accident lors des phases d'accostage d'un véhicule industriel à un quai, et notamment dans le cas où une personne tombe ou passe entre l'arrière du véhicule et le quai.

Par ailleurs, le document US 2003/141965 décrit un dispositif d'aide à la conduite équipant un véhicule industriel et comportant une pluralité de capteurs et une unité de contrôle permettant de détecter une variation discontinue de la distance mesurée par l'un des capteurs de recul et d'émettre alors un signal sensoriel d'alerte.

Un changement brutal de la distance mesurée par l'un des capteurs de recul peut ainsi être détecté et signalé au conducteur du véhicule. Cette variation discontinue de la distance peut notamment être causée par le déplacement d'un objet ou d'une personne à l'intérieur du champ de visée arrière du véhicule.

De plus, ce dispositif comporte également des capteurs agencés sur les parois latérales du véhicule. Ces capteurs permettent d'éviter la collision entre les parois latérales du véhicule et un obstacle.

Cependant, le positionnement de ces capteurs ne permet pas d'éviter la collision entre un obstacle et l'arête séparant la face arrière et une des faces latérales du véhicule. En effet, ces capteurs à visée latérale ne sont pas agencés sur la face arrière du véhicule et leur visée est orientée perpendiculairement par rapport à la direction longitudinale du véhicule.

Par ailleurs, le document WO 2006/114206 décrit un dispositif comportant des capteurs auxiliaires dont l'activation est dépendante de l'angle de braquage entre une semi-remorque et un véhicule tracteur. Cependant rien ne suggère dans ce document, d'activer les capteurs auxiliaires en fonction d'une distance mesurée par des capteurs principaux.

Par conséquent, un second objectif de l'invention est d'éviter toute collision de l'arête arrière du véhicule avec un obstacle latéral, telle une semi remorque dételée par exemple, lors des phases d'entrée et de sortie de quai.

### EXPOSE DE L'INVENTION

L'invention concerne donc un dispositif d'aide à la conduite destiné à équiper un véhicule industriel. Un tel dispositif comporte :
- au moins deux capteurs de recul agencés au niveau de la face arrière du véhicule et orientés vers l'arrière du véhicule, et au moins deux capteurs auxiliaires comprenant chacun un émetteur/récepteur d'une onde ultra sonore et permettant de générer un signal électrique représentatif de la distance parcourue par ladite onde ultra sonore réfléchie sur un obstacle, lesdits au moins deux capteurs auxiliaires comportant deux capteurs de coins agencés au niveau de la face arrière du véhicule et orientés de manière inclinée pour permettre de détecter la présence d'un obstacle situé à proximité des coins arrières du véhicule ;
- une unité de contrôle interfacée avec lesdits au moins deux capteurs de recul et lesdits au moins deux capteurs auxiliaires, apte à traiter les signaux électriques pour déterminer le capteur de recul mesurant la plus courte distance entre le véhicule et l'obstacle, et à partir d'une première valeur de seuil prédéterminée, à émettre un premier signal sensoriel représentatif du signal électrique généré par ledit capteur de recul mesurant la plus courte distance entre le véhicule et l'obstacle, l'unité de contrôle étant apte à détecter une variation discontinue de la distance mesurée par l'un desdits capteurs de recul et à émettre un second signal sensoriel permettant d'alerter le conducteur du véhicule.

Autrement dit, lors de la marche arrière du véhicule, si une variation brutale de la distance mesurée par l'un des capteurs, est détectée, l'unité de contrôle émet un signal d'alarme distinct du premier signal sensoriel. Une telle variation discontinue de la distance mesurée peut notamment être générée par le passage d'une personne entre la partie arrière du véhicule et le quai de déchargement.

La variation de distance entre deux mesures successives doit rester dans une certaine tolérance et être vérifiée sur le balayage suivant. Si la valeur des mesures successives présente une incohérence, la variation de distance est ignorée et n'engendre pas d'alarme. Une mémorisation de séquences successives de mesure de distance permet donc de limiter les déclenchements intempestifs de l'alarme.

De plus, les au moins deux capteurs auxiliaires comportent deux capteurs de coins agencés au niveau de la face arrière du véhicule et orientés de manière inclinée pour permettre de détecter la présence d'un obstacle situé à proximité des coins arrières du véhicule.

Ainsi, le dispositif d'aide à la conduite peut également comporter des capteurs de coins aptes éviter la collision des coins formés par l'arrête entre la face arrière et l'une des faces latérales du véhicule. De tels capteurs de coins peuvent ainsi générer des signaux sensoriels, tels une information sur la distance ou un signal d'alarme, lorsque le véhicule s'approche ou s'éloigne non perpendiculairement par rapport à un quai de chargement.

En effet, lors des manoeuvres de départ ou d'entrée à quai, le conducteur du véhicule dispose d'une très faible visibilité de l'arrière de son véhicule et plus particulièrement lorsque ce véhicule est articulé, telle une semi-remorque entraîné par un véhicule tracteur. Dans ce cas, la semi-remorque peut heurter une semi-remorque stationnant sur le côté du véhicule. Un tel système anti-collision de coin peut ainsi être mis en service automatiquement ou manuellement par le chauffeur du véhicule, notamment en enclenchant les feux de détresse de son véhicule, lorsqu'il arrive ou quitte un quai, correspondant à un obstacle présent de manière continue et immobile pendant une durée importante.

De plus, le dispositif se caractérise en ce que l'unité de contrôle est apte à activer ou désactiver le signal sensoriel propre à un capteur auxiliaire en fonction de la distance mesurée par les au moins deux capteurs de recul.

En effet, lorsque la distance mesurée par les capteurs de recul est inférieure à une première valeur de seuil prédéterminée, il peut être avantageux de désactiver le signal sensoriel représentatif de la distance mesuré par les capteurs de coin ou de toit.

Une temporisation peut également être utilisée pour désactiver les signaux sensoriels générés par les capteurs de coin après un départ de quai. Ce départ de quai peut, quant à lui, être identifié par l'unité de contrôle au moyen des capteurs de recul.

De plus, le capteur de coin est éloigné de la face latérale du véhicule ce qui a pour effet de permettre une augmentation du seuil à partir duquel l'alarme est déclenchée par rapport à un capteur qui serait agencé sur l'une des faces latérales. Par exemple, si le capteur de coin est agencé à 40cm du coin, pour détecter la présence d'un obstacle à 20cm du coin, le seuil d'alarme est porté à sensiblement 60cm. L'augmentation de ce seuil d'alarme permet également d'augmenter la zone de détection et donc d'alarme en arrière dans des zones plus hautes et plus basses que celles couvertes par les capteurs de recul.

Le positionnement des capteurs de coins en regard de la face arrière du véhicule permet également d'éviter des collisions lors de la marche arrière avec un obstacle situé à l'arrière du véhicule qui ne serait pas détecté par les capteurs de recul car trop haut ou trop bas. A titre d'exemple, un capteur de coin peut permettre de détecter un obstacle situé à l'arrière du véhicule et d'une hauteur comprise entre 60cm et 1.40m.

Par ailleurs, l'inclinaison du capteur de coin par rapport à la face arrière du véhicule peut être comprise entre 20 et 60° et avoir une ouverture à sensiblement 180°.

Dans certains modes de réalisation particuliers, le dispositif d'aide à la conduite peut comporter un tel capteur de coin, mais être dépourvu d'une unité de contrôle apte à détecter une variation discontinue de la distance mesurée par les capteurs de recul.

Selon un mode de réalisation particulier, les au moins deux capteurs auxiliaires peuvent comporter deux capteurs de toit agencés sur le toit au niveau de la face arrière du véhicule en étant orientés vers l'arrière du véhicule.

Autrement dit, le dispositif d'aide à la conduite peut également permettre d'éviter une collision de la partie haute du véhicule avec un obstacle tel un portique sur un quai. Un signal sensoriel peut être déclenché notamment lorsque la différence entre les distances mesurées par les deux capteurs de toit dépasse une valeur de seuil prédéterminée.

De même, lorsque la distance mesurée par les capteurs de recul est supérieure à une seconde valeur de seuil prédéterminée, il est possible d'activer le signal sensoriel d'un capteur auxiliaire.

Avantageusement, la variation discontinue de la distance mesurée par l'un des capteurs de recul peut être détectée lorsqu'elle dépasse une seconde valeur de seuil prédéterminée.

Ainsi, un signal d'alarme ne se déclenche qu'à partir du moment où la variation brutale de l'objet détecté dans un périmètre délimité par une distance inférieure à la valeur de seuil prédéterminée. Une telle configuration permet d'éviter les déclenchements intempestifs de l'alarme pour des variations brutales de la distance mesurée ne mettant pas en danger les éventuels piétons ou véhicules qui passeraient à l'arrière du véhicule.

En pratique, la seconde valeur de seuil prédéterminée peut être variable en fonction de la vitesse en marche arrière du véhicule.

En d'autres termes, il est possible d'adapter la valeur de seuil à partir de laquelle le second signal sensoriel est émis par l'unité de contrôle en fonction des conditions de fonctionnement et de déplacement du véhicule. En effet, dans certains cas, et notamment lors d'un déplacement en marche arrière sur une voie en travaux ou en construction, le système d'aide à la conduite n'est pas utilisé pour guider le véhicule et le positionner au plus proche d'un obstacle. En effet, une telle voie est généralement dépourvue d'obstacle et permet un accès rapide d'un chantier aux véhicules industriels. Dans ce cas, le véhicule se déplace à une vitesse élevée et il est donc nécessaire de déclencher le second signal sensoriel très en amont du véhicule pour permettre son arrêt en tenant compte de la distance de freinage importante, et ainsi éviter un accident dû à la collision du véhicule avec un obstacle.

Différentes solutions techniques peuvent être envisagées de manière à déterminer la vitesse du véhicule. Parmi elles, on peut différencier les solutions dans lesquelles le dispositif d'aide à la conduite inclut un système de mesure et les solutions dans lesquelles le dispositif utilise des moyens préexistants sur le véhicule de mesure de la vitesse du véhicule.

Ainsi, selon une première variante, la vitesse du véhicule peut être déterminée au moyen de l'un des au moins deux capteurs de recul. En effet, le capteur permet de mesurer une distance qui varie dans le temps lorsque le véhicule est en mouvement. Ainsi, la vitesse du véhicule peut être déterminée en effectuant le rapport de la variation de distance sur un intervalle de temps prédéterminé. Ce rapport peut également être déterminé par chacun des capteurs de manière à générer une valeur moyenne de la vitesse mesurée par chacun des capteurs.

Selon un second mode de réalisation, la vitesse du véhicule peut être déterminée au moyen d'un capteur orienté en direction d'une roue et apte à mesurer la vitesse de rotation de cette roue. En effet, un capteur à effet Doppler permet de mesurer la vitesse de rotation d'une roue en évaluant sa vitesse tangentielle par mesure de la variation de temps de vol. De cette manière, le dispositif d'aide à la conduite comprend au moins deux capteurs de recul et un troisième capteur dédié à la mesure de la vitesse du véhicule.

Selon un troisième mode de réalisation, la vitesse du véhicule peut être déterminée au moyen d'un capteur de vitesse pré-équipant le véhicule. Dans ce cas, l'unité de commande comprend une entrée permettant de l'interfacer avec le capteur de vitesse du véhicule classiquement agencé au niveau d'un arbre moteur ou de transmission du véhicule.

Avantageusement, l'unité de contrôle peut être apte à piloter un système de freinage du véhicule lorsqu'une variation discontinue de la distance mesurée par l'un des capteurs de recul est détectée.

En d'autres termes, le dispositif d'aide à la conduite peut également commander automatiquement un freinage d'urgence en cas de détection d'un obstacle s'interposant entre le véhicule et un autre obstacle précédemment détecté. Ainsi, l'unité de contrôle peut être interfacée avec un actionneur hydraulique ou pneumatique à commande électrique de manière à alimenter en énergie hydraulique ou pneumatique le système de freinage du véhicule.

Selon un mode de réalisation particulier, le second signal sensoriel peut consister en une information sensitive sonore, visuelle ou vibratoire, cette information étant perceptible par le conducteur du véhicule.

En effet, selon une première variante, le second signal sensoriel peut être émis par un haut-parleur et peut consister par exemple en un son continu de fréquence constante temporisée pendant une durée déterminée.

Selon une seconde variante, le second signal sensoriel peut également consister en une information visuelle générée par des sources lumineuses telles que des diodes électroluminescentes notamment.

Selon un troisième mode de réalisation, le second signal sensoriel peut consister en une information vibratoire, par exemple en déclenchant une vibration au niveau du siège du conducteur ou du volant.

Dans certains cas, il peut également être avantageux que le second signal sensoriel s'ajoute au premier signal sensoriel de manière à générer une information sensitive amplifiée.

Autrement dit, lorsqu'une variation discontinue de la mesure d'un obstacle est détectée, le signal sonore, visuel ou vibratoire formant le premier signal sensoriel, est amplifié, respectivement au niveau acoustique, visible ou de mouvement, de manière à identifier la présence d'un danger. Le deuxième signal sensoriel se distingue dans tous les cas du premier signal, qu'il soit sonore, visuel ou vibratoire.

Avantageusement, les au moins deux capteurs de recul et au moins deux capteurs auxiliaires peuvent être équipés chacun d'un système de dégivrage. En effet, dans certaines conditions climatiques particulières, des dépôts de neige ou de glace peuvent se former à la surface du capteur et générer un dysfonctionnement. Ainsi, un système de dégivrage peut être déclenché lorsque la température extérieure passe en dessous de 0°C pour éviter tout risque de dépôt perturbateur de neige ou de glace. Un tel système de dégivrage peut être soit totalement autonome et intégré au capteur, soit piloté par l'unité de contrôle comportant une sonde de température. Ce système de dégivrage peut notamment être réalisé en intégrant dans le corps du capteur une résistance. Ainsi, en régulant la circulation du courrant au travers de cette résistance, celle-ci s'échauffe et permet de transmettre de la chaleur au capteur par conduction.

En pratique, les deux capteurs de coin peuvent émerger du plan défini par la face arrière et peuvent s'escamoter en cas de contact avec un obstacle.

Autrement dit, les capteurs de coin ont une capacité de déplacement par rapport à la face arrière du véhicule. Différents modes de réalisation sont alors envisageables et notamment il possible de positionner les capteurs de coin sur un support déformable apte à se déformer dans un plan sensiblement horizontal. Il également possible de positionner le capteur de coin sur un support agencé en liaison pivot d'axe vertical par rapport au véhicule.

### DESCRIPTION SOMMAIRE DES FIGURES

La manière de réaliser l'invention ainsi que les avantages qui en découlent ressortiront bien de la description du mode de réalisation qui suit, donné à titre indicatif et non limitatif, à l'appui des figures annexées dans lesquels :
- la figure 1 est une vue en perspective d'un véhicule équipé d'un dispositif d'aide à la conduite conforme à l'invention ;
- les figures 2 et 3 sont des vues de dessus et d'arrière d'un véhicule équipé d'un dispositif d'aide à la conduite conforme à l'invention ;
- la figure 4 est une vue schématique du dispositif d'aide à la conduite.

### MANIERE DE REALISER L'INVENTION

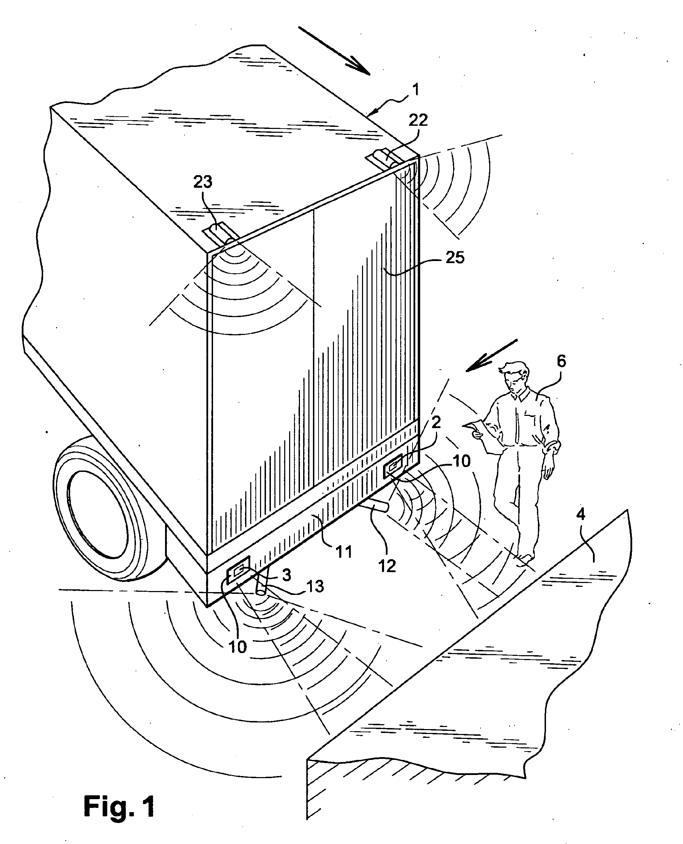

Comme déjà évoqué, l'invention concerne un dispositif d'aide à la conduite d'un véhicule (1) de type industriel. Tel que représenté à la figure 1, un tel véhicule peut se présenter sous la forme d'une semi-remorque entraîné par un véhicule tracteur, mais il ne se limite pas à cet unique mode de réalisation et peut notamment se présenter sous la forme d'un camion porteur simple ou d'un véhicule de chantier.

Ainsi, et tel que représenté à la figure 1, une partie arrière (11) d'une face arrière (25) est équipée d'au moins deux capteurs de recul (2, 3) permettant, lorsque le véhicule se déplace en marche arrière, d'identifier la présence d'une personne (6) dans le champ de détection des capteurs. En effet, lorsque le véhicule (1) recule, et qu'une personne (6) coupe le champ de détection des capteurs (2, 3), celle-ci crée une variation brutale de la distance mesurée par au moins l'un des deux capteurs (2, 3). Ainsi, lorsqu'une personne (6) s'interpose entre le quai de chargement (4) et le véhicule (1), un signal d'alerte est émis. La détection de cette variation brutale de la distance mesurée ne s'effectue qu'à partir d'une distance prédéterminée (d2), qui peut être fonction de la vitesse en marche arrière du véhicule.

Par ailleurs, des capteurs de coin (12, 13) sont agencés au niveau de la face arrière (25) du véhicule et sont orientés de manière inclinée par rapport à la face arrière (25). Ces capteurs de coins (12, 13) permettent ainsi de signaler à l'utilisateur la présence d'un obstacle latéral. Des capteurs de toit peut également être positionnés en haut de la face arrière (25) pour prévenir d'un collision avec un obstacle haut tel un portique.

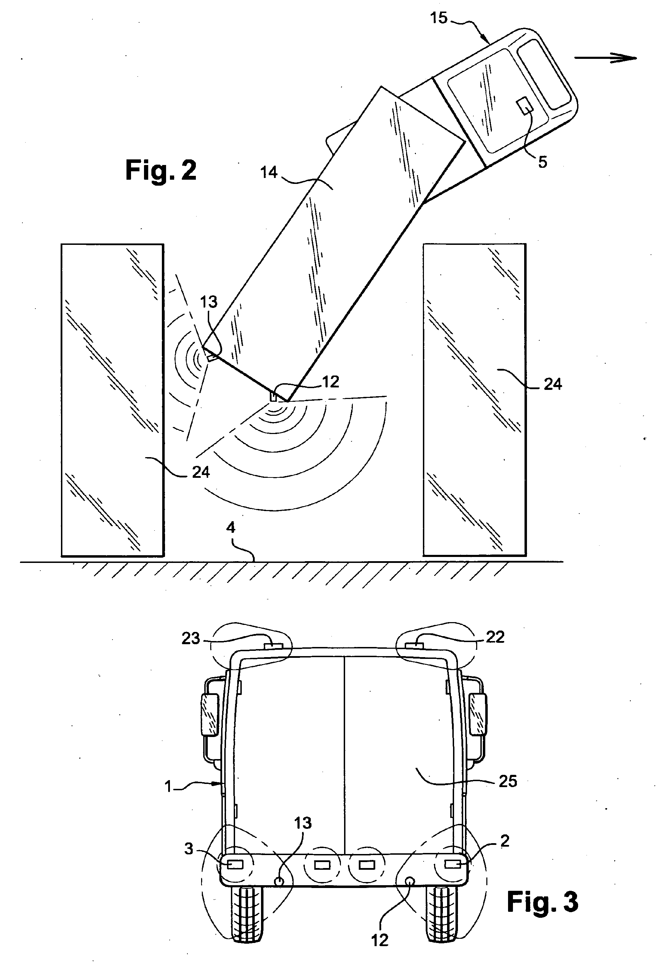

Tel que représenté à la figure 2, les capteurs de coin (12, 13) visent latéralement par rapport au véhicule de manière à faciliter les manoeuvres lors d'une entrée ou d'un départ de quai d'un véhicule stationnant parallèlement à côté d'autres véhicules (24).

Ainsi, lorsque le véhicule est articulé, tel un véhicule tracteur (15) une remorque (14), un angle mort est généré dans le rétroviseur situé du côté vers lequel le véhicule est en train de manoeuvrer. Ainsi, l'arête (34) du véhicule (24) peut alors heurter le flanc de la remorque (14) engendrant des dégâts importants sur le véhicule et/ou sa marchandise.

L'unité de commande (5) située à l'intérieur de la cabine reçoit alors des informations issues des capteurs latéraux (12, 13) et est apte à émettre un signal sensoriel de manière à informer le conducteur qu'une collision est imminente.

Tel que représenté à la figure 3, les capteurs de coin (12, 13) permettent également de détecter un obstacle situé vers l'arrière du véhicule et dans des zones plus hautes et plus basses que celles inspectées par les capteurs de recul (2, 3).

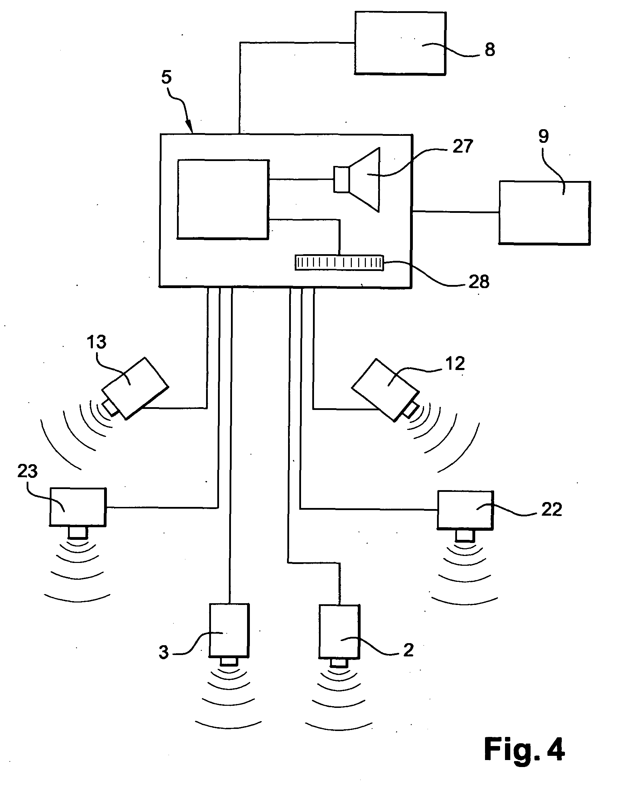

Tel que représenté à la figure 4, le dispositif d'aide à la conduite comporte une unité de contrôle (5) interfacée avec au moins un groupe de deux capteurs (2, 3), (22, 23) ou (12, 13). Bien évidemment, le dispositif peut comporter une combinaison de plusieurs groupes de capteurs, de manière à former un dispositif d'aide à la conduite dans de diverses circonstances.

En effet, les capteurs de recul (2, 3) permettent de détecter une variation brusque de la mesure entre un obstacle et l'arrière du véhicule. Dans ce cas, une information sonore peut par exemple être émise par un haut-parleur (27) intégré à l'unité de commande (5). Un signal d'alarme permet alors d'alerter le conducteur et de stopper automatiquement ou non le véhicule. Pour ce faire, la commande d'un système de freinage (9) est alors connectée au niveau d'une sortie de l'unité de commande (5).

Par ailleurs, un afficheur à diodes électroluminescentes (28) peut permettre d'indiquer au conducteur du véhicule un degré d'alignement entre son véhicule et un obstacle.. Tel que représenté, l'unité de commande (5) peut également être connectée au capteur de vitesse (8) pré-équipant le véhicule. De cette manière, il est possible d'adapter une valeur de seuil à partir de laquelle une variation brusque de la mesure peut être considérée comme dangereuse.

Il ressort de ce qui précède qu'un dispositif d'aide à la conduite destiné à équiper un véhicule industriel conforme à l'invention présente de multiples avantages, notamment :
- il permet d'éviter des accidents, notamment lors des phases d'accostage d'un véhicule au niveau d'un quai de déchargement,
- il permet de faciliter les manoeuvres en marche avant pour quitter un quai de déchargement,

## Revendications

1. Dispositif d'aide à la conduite destiné à équiper un véhicule industriel (1) et comportant :
- au moins deux capteurs de recul (2, 3) agencés au niveau de la face arrière (25) du véhicule (1) et orientés vers l'arrière du véhicule (1), et au moins deux capteurs auxiliaires (12, 13, 22, 23) comprenant chacun un émetteur/récepteur d'une onde ultra sonore et permettant de générer un signal électrique représentatif de la distance parcourue par ladite onde ultra sonore réfléchie sur un obstacle (4), lesdits au moins deux capteurs auxiliaires comportant deux capteurs de coins (12, 13) agencés au niveau de la face arrière (25) du véhicule (1) et orientés de manière inclinée pour permettre de détecter la présence d'un obstacle (6, 24) situé à proximité des coins arrières du véhicule (1) ;
- une unité de contrôle (5) interfacée avec lesdits au moins deux capteurs de recul (2, 3) et lesdits au moins deux capteurs auxiliaires (12, 13, 22, 23), apte à traiter les signaux électriques pour déterminer le capteur de recul (2, 3) mesurant la plus courte distance entre le véhicule (1) et l'obstacle (4), et à partir d'une première valeur de seuil prédéterminée (d1), à émettre un premier signal sensoriel représentatif du signal électrique généré par ledit capteur de recul (2, 3) mesurant la plus courte distance entre le véhicule (1) et l'obstacle (4), l'unité de contrôle (5) étant apte à détecter une variation discontinue de la distance mesurée par l'un desdits capteurs de recul (2, 3) et à émettre un second signal sensoriel permettant d'alerter le conducteur du véhicule (1) ;
**caractérisé en ce que** l'unité de contrôle (5) est apte à activer ou désactiver le signal sensoriel propre à un capteur auxiliaire (12, 13, 22, 23) en fonction de la distance mesurée par les au moins deux capteurs de recul (2, 3).

2. Dispositif selon la revendication 1, **caractérisé en ce que** les au moins deux capteurs auxiliaires comportent deux capteurs de toit (22, 23) agencés sur le toit au niveau de la face arrière (25) du véhicule (1) en étant orientés vers l'arrière du véhicule (1).

3. Dispositif selon la revendication 1, **caractérisé en ce que** la variation discontinue de la distance mesurée par l'un desdits capteurs de recul (2, 3) est détectée lorsqu'elle dépasse une seconde valeur de seuil prédéterminée (d2).

4. Dispositif selon la revendication 3, **caractérisé en ce que** la seconde valeur de seuil prédéterminée (d2) est variable et fonction de la vitesse en marche arrière du véhicule (1).

5. Dispositif selon la revendication 1, **caractérisé en ce que** l'unité de contrôle (5) est apte à piloter un système de freinage (9) du véhicule (1).

6. Dispositif selon la revendication 1, **caractérisé en ce que** le second signal sensoriel consiste en une information sensitive sonore, visuelle ou vibratoire, ladite information étant perceptible par le conducteur du véhicule (1).

7. Dispositif selon la revendication 1, **caractérisé en ce que** le second signal sensoriel s'ajoute au premier signal sensoriel de manière à générer une information sensitive amplifiée.

8. Dispositif selon la revendication 1, **caractérisé en ce que** lesdits au moins deux capteurs de recul (2, 3) et au moins deux capteurs auxiliaires (12, 13, 22, 23) sont équipés chacun d'un système de dégivrage (10).

9. Dispositif selon la revendication 1, **caractérisé en ce que** lesdits au moins deux capteurs de coin (12, 13) émergent du plan défini par la face arrière (25) et sont aptes à s'escamoter en cas de contact avec un obstacle.

## Claims

1. A driver-assist device intended to equip an industrial vehicle (1) and comprising:
- at least two backup sensors (2, 3) arranged at the level of the rear surface (25) of the vehicle (1) and oriented towards the back of the vehicle (1), and at least two auxiliary sensors (12,13, 22, 23) each comprising an ultrasound wave transceiver and enabling to generate an electric signal representative of the distance traveled by said ultrasound wave reflected on an obstacle (4), said at least two auxiliary sensors comprising two corner sensors (12, 13) arranged at the rear surface (25) of the vehicle (1) and inclined to enable to detect the presence of an obstacle (6, 24) located close to the back corners of the vehicle (1);
- a control unit (5) interfaced with said at least two backup sensors (2, 3) and said at least two auxiliary sensors (12, 13, 22, 23), capable of processing the electric signals to determine the backup sensor (2, 3) measuring the shortest distance between the vehicle (1) and the obstacle (4), and from a first predetermined threshold value (d1), transmitting a first sensory signal representative of the electric signal generated by said backup sensor (2, 3) measuring the shortest distance between the vehicle (1) and the obstacle (4), the control unit (5) being capable of detecting a discontinuous variation of the distance measured by one of said backup sensors (2, 3) and of transmitting a second sensory signal enabling to warn the driver of the vehicle (1);
**characterized in that** the control unit (5) is capable of activating or deactivating the specific sensory signal of an auxiliary sensor (12, 13, 22, 23) according to the distance measured by said at least two backup sensors (2, 3).

2. The device of claim 1, **characterized in that** said at least two auxiliary sensors comprise two roof sensors (22, 23) arranged on the roof at the level of the rear surface (25) of the vehicle (1) while being oriented towards the back of the vehicle (1).

3. The device of claim 1, **characterized in that** the discontinuous variation of the distance measured by one of said backup sensors (2, 3) is detected when it exceeds a second predetermined threshold value (d2).

4. The device of claim 3, **characterized in that** the second predetermined threshold value (d2) is variable and is a function of the reverse speed of the vehicle (1).

5. The device of claim 1, **characterized in that** the control unit (5) is capable of driving a braking system (9) of the vehicle (1).

6. The device of claim 1, **characterized in that** the second sensory signal comprises sensory sound, visual, or vibration information, said information being perceptible by the driver of the vehicle (1).

7. The device of claim 1, **characterized in that** the second sensory signal adds to the first sensory signal to generate amplified sensitive information.

8. The device of claim 1, **characterized in that** said at least two backup sensors (2, 3) and at least two auxiliary sensors (12, 13, 22, 23) are each equipped with a defrosting system (10).

9. The device of claim 1, **characterized in that** said at least two corner sensors (12, 13) emerge from the plane defined by the rear surface (25) and are capable of retracting in the event of a contact with an obstacle.

## Patentansprüche

1. Fahrassistenzvorrichtung, die dazu bestimmt ist, ein Nutzfahrzeug (1) auszurüsten, und umfasst:
- mindestens zwei Rückfahrsensoren (2, 3), die im Bereich der Rückseite (25) des Fahrzeugs (1) angeordnet und vom Fahrzeug (1) nach hinten ausgerichtet sind, und mindestens zwei zusätzliche Sensoren (12, 13, 22, 23), die jewells einen Ultraschallwellen-Sender/Empfänger umfassen und es ermöglichten, ein elektrisches Signal zu erzeugen, das für die Strecke steht, die die an einem Hindernis (4) reflektierte Ultraschallwelle zurückgelegt hat, wobei die mindestes zwei zusätzlichen Sensoren zwei Eckensensoren (12, 13) umfassen, die im Bereich der Rückseite (25) des Fahrzeugs (1) angeordnet und geneigt ausgerichtet sind, um zu ermöglichen, das Vorhandensein eines Hindernisses (6, 24) zu erfassen, das sich in der Nähe der hinteren Ecken des Fahrzeugs (1) befindet;
- eine Steuereinheit (5), die über eine Schnittstelle mit den mindestens zwei Rückfahrsensoren (2, 3) und den mindestens zwei zusätzlichen Sensoren (12, 13, 22, 23) verbunden ist und elektrische Signale verarbeiten kann, um den Rückfahrsensor (2, 3) zu bestimmen, der den kürzesten Abstand zwischen dem Fahrzeug (1) und dem Hindernis (4) misst, und ausgehend von einem ersten vorbestimmten Schwellenwert (d1) ein erstes sensorisches Signal senden kann, das für das elektrische Signal steht, das von dem Rückfahrsensor (2, 3) erzeugt wird, der den kürzesten Abstand zwischen dem Fahrzeug (1) und dem Hindernis (4) misst, wobei die Steuereinheit (5) eine unstetige Veränderung des Abstands erfassen kann, der von einem der Rückfahrsensoren (2, 3) gemessen wird, und ein zweites sensorisches Signal senden kann, das es ermöglicht, den Fahrer des Fahrzeugs (1) zu warnen;
**dadurch gekennzeichnet, dass** die Steuereinheit (5) das einem zusätzlichen Sensor (12, 13, 22, 23) eigene sensorische Signal in Abhängigkeit von dem Abstand aktivieren oder deaktivieren kann, der von den mindestens zwei Rückfahrsensoren (2, 3) gemessen wird.

2. Vorrichtung nach Anspruch 1, **dadurch gekennzeichnet, dass** die mindestens zwei zusätzlichen Sensoren zwei Dachsensoren (22, 23) umfassen, die auf dem Dach im Bereich der Rückseite (25) des Fahrzeugs (1) angeordnet und vom Fahrzeug (1) nach hinten ausgerichtet sind.

3. Vorrichtung nach Anspruch 1, **dadurch gekennzeichnet, dass** die unstetige Veränderung des von einem der Rückfahrsensoren (2, 3) gemessenen Abstands erfasst wird, wenn sie einen zweiten vorbestimmten Schwellenwert (d2) überschreitet.

4. Vorrichtung nach Anspruch 3, **dadurch gekennzeichnet, dass** der zweite vorbestimmte Schwellenwert (d2) variabel ist und von der Geschwindigkeit im Rückwärtsgang des Fahrzeugs (1) abhängt.

5. Vorrichtung nach Anspruch 1, **dadurch gekennzeichnet, dass** die Steuereinheit (5) ein Bremssystem (9) des Fahrzeugs (1) steuern kann.

6. Vorrichtung nach Anspruch 1, **dadurch gekennzeichnet, dass** das zweite sensorische Signal aus einer schalltechnischen, visuellen oder vibratorischen Sinnesinformation besteht, wobei die Information vom Fahrer des Fahrzeugs (1) wahrgenommen werden kann.

7. Vorrichtung nach Anspruch 1, **dadurch gekennzeichnet, dass** das zweite sensorische Signal zum ersten sensorischen Signal hinzukommt, um eine verstärkte Sinnesinformation zu erzeugen.

8. Vorrichtung nach Anspruch 1, **dadurch gekennzeichnet, dass** die mindestens zwei Rückfahrsensoren (2, 3) und die mindestens zwei zusätzlichen Sensoren (12, 13, 22, 23) jeweils mit einem Enteisungssystem (10) ausgestattet sind.

9. Vorrichtung nach Anspruch 1, **dadurch gekennzeichnet, dass** die mindestens zwei Ecksensoren (12, 13) aus der durch die Rückseite (25) definierten Ebene hervortreten und sich im Falle eines Kontakts mit einem Hindernis versenken können.
